# EUROPEAN PATENT APPLICATION

(11) **EP 4 624 091 A1**
(43) Date of publication of application: **01.10.2025**
(21) Application number: 24892478.9
(22) Date of filing: 06.08.2024
(51) Int. Cl.: B23K 37/04

(54) **PRESSING PLATE FIXTURE AND WELDING DEVICE**

(30) Priority: 08.02.2024 CN 202420290220 U
(71) Applicant: Contemporary Amperex Technology Co., Ltd., Ningde, Fujian 352100 (CN)
(72) Inventor: WANG, Tengteng, Ningde, Fujian 352100 (CN); YU, Xinglu, Ningde, Fujian 352100 (CN); QUE, Tianxiang, Ningde, Fujian 352100 (CN); PAN, Wensheng, Ningde, Fujian 352100 (CN)
(74) Representative: Herrmann, Uwe
(86) International application number: PCT/CN2024/110077
(87) International publication number: WO 2025/167022

(57) **Abstract**

A pressing plate tool and a welding apparatus are disclosed. The pressing plate tool includes a pressing plate assembly, and the pressing plate assembly includes: a pressing plate provided with a via hole extending in a first direction; a pressing head arranged on the pressing plate in a manner of being capable of moving relative to the pressing plate in the first direction, the pressing head being provided with a position-limiting hole extending in the first direction, the position-limiting hole being coaxial and in communication with the via hole; and a position-limiting member including a head portion and a rod portion, the rod portion including a first rod portion and a second rod portion connected in the first direction, a thread being formed on the first rod portion, the thread of the first rod portion being fastened to a thread in the via hole, the second rod portion extending into the position-limiting hole, and the second rod portion being clearance-fitted to an inner surface of the position-limiting hole; wherein the size of the second rod portion extending into the position-limiting hole is smaller than the size of the position-limiting hole extending in the first direction.

## Description

### CROSS-REFERENCE TO RELATED APPLICATIONS

The present disclosure is based upon and claims priority to Chinese Patent Application No. 202420290220.1, filed on February 8, 2024 and entitled "PRESSING PLATE TOOL AND WELDING APPARATUS", which is incorporated into the present disclosure as a reference in its entirety.

### TECHNICAL FIELD

The present disclosure relates to the field of battery manufacturing technologies, and in particular to, a pressing plate tool and a welding apparatus.

### BACKGROUND

New energy batteries are increasingly widely applied in life and industry. For example, new energy vehicles equipped with batteries have been widely used. In addition, batteries are increasingly used in the fields of energy storage and the like.

In a production and manufacturing process of a battery, an adapter plate and a pole on a top cover need to be welded. During the welding operation, it is usually required to use a pressing plate tool to press and tighten the adapter plate and the pole on the top cover, so that the two fit tightly to avoid a relative movement from affecting the quality of the welding. In the related art, in the repeated pressing process of a pressing head of the pressing plate tool, a position-limiting member connecting the pressing head and a pressing plate may become loose, which may cause misalignment of the connection between the pressing head and the pressing plate, thereby affecting the reliability of welding. Therefore, how to reduce the possibility of loosening of the position-limiting member to improve the welding quality is one of the research topics in the industry.

### SUMMARY

In order to solve the above technical problems, the present disclosure provides a pressing plate tool and a welding apparatus.

The present disclosure is implemented through the following technical solutions.

A first aspect of the present disclosure provides a pressing plate tool, and the pressing plate tool includes at least one pressing plate assembly, the pressing plate assembly including: a pressing plate provided with a via hole extending in a first direction; a pressing head arranged on the pressing plate in a manner of being capable of moving relative to the pressing plate in the first direction, the pressing head being provided with a position-limiting hole extending in the first direction, and the position-limiting hole being coaxial with and connected to the via hole; and a position-limiting member including a head portion and a rod portion, the rod portion including a first rod portion and a second rod portion connected in the first direction, a thread being formed on the first rod portion, the thread of the first rod portion being fastened to a thread in the via hole, the second rod portion extending into the position-limiting hole, and the second rod portion being clearance-fitted to an inner surface of the position-limiting hole; where the size of the second rod portion extending into the position-limiting hole is smaller than the size of the position-limiting hole extending in the first direction.

The position-limiting member is capable of position-limiting the pressing head and the pressing plate in a radial direction of the position-limiting member. The thread is formed only on the first rod portion of the position-limiting member, and the second rod portion extending into the position-limiting hole of the pressing head is clearance-fitted to the inner surface of the position-limiting hole. Therefore, when the pressing head presses a workpiece and floats in the first direction, the position-limiting hole of the pressing head moves relative to the position-limiting member in an axial direction of the position-limiting member, thereby approaching or moving away relative to the pressing plate (also called "floating"), while the position-limiting member itself does not move relative to the pressing plate. **In** this way, the possibility of the position-limiting member loosening due to its own movement during the repeated floating of the pressing head is capable of being effectively reduced, thereby being capable of reducing the possibility of misalignment between the pressing head and the pressing plate or even a floating failure of the pressing head, thus improving the reliability of welding.

**In** some embodiments, the position-limiting hole includes a blind hole.

Therefore, when the pressing head presses the workpiece and floats in the first direction, the second rod portion of the position-limiting member extending into the position-limiting hole may not expose from the pressing head through the position-limiting hole, so that the position-limiting member may not interfere with the pressed workpiece or other components outside the pressing head during welding, thereby reducing the possibility of damage to the workpiece and external components, ensuring the quality of welding, and reducing the possibility of the position-limiting member loosening due to the collision of components outside the pressing head with the position-limiting member.

**In** some embodiments, the pressing plate tool further includes an elastic member, and the elastic member sleeves the second rod portion and is configured to apply an elastic force to the pressing head. The via hole includes a first section and a second section, the first section is located on a side of the second section facing away from the pressing head in the first direction, and a hole size of the first section is smaller than a hole size of the second section. The thread in the via hole is formed on an inner wall of the first section, the elastic member is partially located in the second section, one end of the elastic member abuts against an end surface of the first section on a side facing away from the pressing plate in the first direction, and the other end of the elastic member abuts against an end surface of the pressing head on a side close to the pressing plate in the first direction.

When the pressing head presses the workpiece, the elastic member can achieve a certain elastic buffering function, so that a pressing force applied by the pressing head to the workpiece is more uniform, thereby protecting the workpiece and reducing the possibility of damage to the workpiece due to excessive pressing. In addition, when the size and the shape of the workpiece to be welded change, the pressing head is capable of better adapting to the changes in the workpiece under the action of the elastic member, so as to press the workpiece stably and reliably.

In some embodiments, the pressing plate assembly includes at least one gasket, and the gasket sleeves the position-limiting member and located between the head portion and the pressing plate.

Arranging the gasket is capable of increasing a contact area between the head portion and the pressing plate, thereby increasing the friction between the two, so that the connection between the position-limiting member and the pressing plate is tighter, which further reduces the possibility of loosening of the position-limiting member.

In some embodiments, two end surfaces of the gasket opposite to each other in the first direction are respectively provided with a first serrated portion and a second serrated portion, and when there are a plurality of gaskets, the first serrated portion and the second serrated portion on opposite surfaces of adj acent gaskets are capable of meshing with each other.

The first serrated portion and the second serrated portion are formed on the two opposite end surfaces of the gasket, the serrated portions may deform when subjected to force, and therefore, the friction forces between the gasket and the head portion and between the gasket and the pressing plate may be increased, which further improves the locking force of the gasket, thereby further improving the anti-loosening effect. In addition, the first serrated portion and the second serrated portion are capable of meshing with each other, and therefore, when a plurality of gaskets are arranged, the gaskets are capable of meshing with each other through the serrated portions to form a stable combination configuration, thereby further reducing the possibility of loosening of the position-limiting member.

In some embodiments, the first serrated portion includes a plurality of first helical teeth distributed circumferentially around an axis of the gasket, the second serrated portion includes a plurality of second helical teeth distributed circumferentially around the axis of the gasket, and the first helical teeth and the second helical teeth have opposite inclination directions.

The first serrated portion includes the first helical teeth and the second serrated portion includes the second helical teeth, and therefore, after the position-limiting member is tightened to the via hole, the first helical teeth and the second helical teeth are capable of reducing the possibility of reverse rotation of the position-limiting member and the pressing plate relative to the gasket, thereby improving the anti-loosening effect.

In some embodiments, the first helical teeth are evenly distributed along the entire circumference in a circumferential direction of the gasket; and/or the second helical teeth are evenly distributed along the entire circumference in the circumferential direction of the gasket.

Therefore, the uniformity of the anti-loosening effect is capable of being improved, and the possibility of the position-limiting member becoming loose can be further reduced.

In some embodiments, a countersunk hole is formed on the surface of the via hole facing away from the pressing head, the head portion of the position-limiting member is located in the countersunk hole, and the gasket is located between the head portion and a bottom end surface of the countersunk hole.

Therefore, the head portion of the position-limiting member and the gasket may not be exposed on an outer surface of the pressing plate facing away from the pressing head, thereby being capable of ensuring the flatness of the outer surface of the pressing plate and reducing the possibility of interference with other components arranged thereon that causes undesirable conditions such as a floating failure of the pressing head.

In some embodiments, the pressing head includes a hook portion extending in a second direction, the pressing plate includes a slot extending in the second direction, the slot is configured for the hook portion to insert in, and the pressing head is arranged on the pressing plate through the cooperation between the hook portion and the slot; where when the hook portion is inserted into the slot, the hook portion is capable of reciprocating in the slot in the first direction, and the second direction is perpendicular to the first direction.

Therefore, through the cooperation of the hook portion and the slot, the pressing head and the pressing plate are capable of being position-limited in the first direction in a simple manner without affecting the floating of the pressing head in the first direction, thereby reducing the possibility of the pressing head falling from the pressing plate.

In some examples, the elastic member includes a spring.

The spring has a simple structure, is easy to install, and is capable of cushioning impact and absorbing vibration. In this way, the pressing plate tool is capable of achieving elastic buffering of the workpiece by using a simple structure, thereby protecting the workpiece, increasing the reliability of the pressing plate tool, and reducing the production cost of the pressing plate tool.

In some embodiments, there are two pressing plate assemblies; the pressing plates of the two pressing plate assemblies are connected to each other; or the pressing plates of the two pressing plate assemblies are formed into an integrated structure.

As a result, the pressing plate tool is capable of pressing two groups of workpieces at the same time, thereby improving the production efficiency. In addition, the two pressing plate assemblies connected to each other or formed into an integrated structure are capable of making the structure of the pressing plate tool more compact and more convenient for assembling.

In some embodiments, the pressing plate tool further includes an identification code; a groove is formed on the surface of one side of the pressing plate facing away from the pressing head, and the identification code is arranged in the groove.

The pressing plate tool is provided with the identification code, and therefore, by scanning the identification code using a scanning apparatus, the welding process of the workpiece is capable of being traced, and the use status of the pressing plate tool is also capable of being traced, so that the pressing plate tool is capable of being replaced in time to ensure the welding quality. In addition, by arranging the groove, the position of the identification code on the pressing plate can be kept uniform each time, so that the scanning apparatus is capable of accurately scanning the identification code.

A second aspect of the present disclosure provides a welding apparatus, and the welding apparatus includes the pressing plate tool provided according to the first aspect of the present disclosure, the pressing plate tool being capable of reciprocating in the first direction; a positioning tool configured to position a workpiece to be welded, the positioning tool being located on an opposite side of the pressing plate tool in the first direction; and a welding tool configured to weld the workpiece pressed by the pressing head of the pressing plate tool.

The welding apparatus includes the pressing plate tool, and therefore, the workpiece to be welded is capable of being pressed tightly by the pressing plate tool before welding, thereby being capable of reducing the occurrence of undesirable conditions such as welding defocusing and false welding caused by unexpected movement of the workpiece during the welding, which improves the quality of welding and ensures the reliability of the welding apparatus.

### Effect of the utility model

The present disclosure provides a pressing plate tool and a welding apparatus with good anti-loosening effect and high welding reliability.

### DESCRIPTION OF DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present disclosure. Moreover, in all of the drawings, the same components are indicated by the same reference numerals. In the drawings:
FIG. 1 is a schematic three-dimensional structural diagram of a pressing plate tool according to some embodiments of the present disclosure;
FIG. 2 is a schematic planar structural diagram of a pressing plate tool according to some embodiments of the present disclosure;
FIG. 3 is a schematic three-dimensional exploded structural diagram of a pressing plate tool according to some embodiments of the present disclosure;
FIG. 4 is a partial planar sectional diagram of a pressing plate tool according to some embodiments of the present disclosure; and
FIG. 5 is a schematic three-dimensional structural diagram of a position-limiting member and a gasket according to some embodiments of the present disclosure.

List of reference numerals:
1-Pressing plate; 11-Via hole; 11a-Thread (of via hole); 111-First section; 112-Second section; 113-Countersunk hole; 12-First through hole; 13-Slot; 131-First rib; 132-Extension groove; 14-Groove; 2-Pressing head; 21-Position-limiting hole; 22-Second through hole; 23-Hook portion; 231-Second rib; 3-Position-limiting member; 31-Head portion; 32-Rod portion; 321-First rod portion; 322-Second rod portion; 321a-Thread (of first rod portion); 4-Elastic member; 5-Gasket; 51-First serrated portion; 52-Second serrated portion; 6-Identification code; 10-Pressing plate assembly; 100-Pressing plate tool.

### DETAILED DESCRIPTION

Examples of the technical solutions of the present disclosure will be described in detail below in conjunction with the drawings. The following embodiments are only used to illustrate the technical solutions of the present disclosure more clearly, and are therefore used only as examples, and should not be used to limit the protection scope of the present disclosure.

Unless otherwise defined, all technical and scientific terms used herein have the same meanings as commonly understood by those skilled in the art in the present disclosure. The terms used herein are intended only for the purpose of describing specific embodiments and are not intended to limit the present disclosure. The terms "including" and "having" and any variants thereof in the present disclosure are intended to cover non-exclusive inclusion.

In the description of the embodiments of the present disclosure, the technical terms "first", "second", and the like are only used for distinguishing different objects, and cannot be understood as indicating or implying a relative importance or implicitly specifying the number, particular order, or primary and secondary relation of the technical features indicated. In the description of the embodiments of the present disclosure, "a plurality of" means two or more, unless otherwise explicitly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is only an association relationship for describing associated objects, indicating that three relationships may exist. For example, A and/or B may indicate three situations: A exists alone, both A and B exist, and B exists alone. In addition, the character "/" herein generally indicates an "or" relationship between the associated objects.

In the description of the embodiments of the present disclosure, the technical terms "length," "width," "thickness," "upper," "lower," "front," "rear," "left," "right," "vertical," "horizontal," "top," "bottom," "inner," "outer," "circumferential," and the like indicate orientations or positional relationships based on the orientations or positional relationships shown in the drawings, and are intended only to facilitate and simplify the description of the embodiments of the present disclosure, and are not intended to indicate or imply that a device or element referred to must have a particular orientation, be constructed, operated and used in a particular orientation, and therefore should not be construed as limiting the embodiments of the present disclosure.

In the description of the embodiments of the present disclosure, unless otherwise expressly specified and defined, the technical terms "mounted," "linked," "connected," "fixed," and the like are to be understood broadly, and may, for example, be fixedly connected or detachably connected, or integrated; and may also be mechanically connected or electrically connected; and may be directly linked or indirectly linked through an intermediate medium, and may be internal communication or interaction between two elements. For those of ordinary skill in the art, the specific meanings of the above terms in the embodiments of the present disclosure can be understood according to specific situations.

In the description of the embodiments of the present disclosure, unless otherwise expressly specified and defined, the technical term "contact" shall be understood in a broad sense, either as direct contact, as contact across an intermediate medium layer, as contact between the two in contact that is substantially free of interaction force, or as contact with interaction force between the two in contact.

In the following, the present disclosure will be described in detail.

At present, new energy batteries are increasingly used in daily life and industry. The new energy batteries are not only applied in energy storage power supply systems such as water power, fire power, wind power, and solar power stations, but also widely applied in electric transportation tools, such as electric bicycles, electric motorcycles and electric vehicles, as well as many fields, such as aerospace. With the continuous expansion of the application field of power batteries, the demand in the market is also constantly expanding.

In the production and manufacturing process of batteries, welding has always been one of important processes in the battery production process. There are many workpieces that need to be welded. For example, it is needed to weld a tab and an adapter plate, weld the adapter plate and a pole of a top cover, weld the pole and a bus component, and the like. During the welding operation, a pressing plate tool is usually required to press and tighten a workpiece to be welded to reduce the possibility that the workpiece moves relative to a welding apparatus or workpieces moves relative to each other, which may cause undesirable conditions such as no welding and false welding, thereby affecting the quality of the welding.

In the related art, the position-limiting member usually connects the pressing plate and the pressing head by means of a thread connection. In the process of the pressing head of the pressing plate tool repeatedly pressing the workpiece, the position-limiting member may become loose due to the force. At the same time, mechanical vibration in the welding process may also cause the position-limiting member to loosen. After the position-limiting member becomes loose, it may extend too far beyond the outer surface of the pressing plate and interfere with another component arranged on the pressing plate, which may cause undesirable conditions such as connection misalignment between the pressing head and the pressing plate or failure in floating of the pressing head. At this time, if the pressing head continues to press the workpiece, it may cause the workpiece to be deformed or cause the workpiece to be pressed too tightly, which may cause the defocus focus to shift during welding or insufficient welding energy, resulting in poor welding or false welding, thereby seriously affecting the welding quality.

In view of the problems existing in the above related technologies, the present disclosure proposes a pressing plate tool. The pressing plate tool includes at least one pressing plate assembly, and the pressing plate assembly includes a pressing plate, a pressing head, and a position-limiting member. The pressing plate is provided with a via hole extending in a first direction. The pressing head is arranged on the pressing plate in a manner of being capable of moving relative to the pressing plate in the first direction, the pressing head is provided with a position-limiting hole extending in the first direction, and the position-limiting hole is coaxial and in communication with the via hole. The position-limiting member includes a head portion and a rod portion. The rod portion includes a first rod portion and a second rod portion connected in the first direction. A thread is formed on the first rod portion, and the thread of the first rod portion is fastened to a thread in the via hole. The second rod portion extends into the position-limiting hole, and the second rod portion is clearance-fitted to an inner surface of the position-limiting hole. The size of the second rod portion extending into the position-limiting hole is smaller than the size of the position-limiting hole extending in the first direction.

The thread on the position-limiting member of the pressing plate tool in the embodiment of the present disclosure is only formed on the first rod portion of the position-limiting member, and is only in thread-fit to the pressing plate of the pressing plate tool, while the second rod portion of the position-limiting member extending into the position-limiting hole of the pressing head is clearance-fitted to the inner surface of the position-limiting hole. Therefore, when the pressing head presses the workpiece and floats in the first direction, the position-limiting hole of the pressing head moves relative to the position-limiting member, but the position-limiting member itself does not move. In this way, the possibility of the position-limiting member loosening due to its own movement during the repeated floating of the pressing head is capable of being effectively reduced, thereby being capable of reducing the possibility of misalignment between the pressing head and the pressing plate and a floating failure of the pressing head, thereby improving the reliability of welding.

The pressing plate tool according to the embodiment of the present disclosure can be used in the production process of a battery, for example, to press and tighten the adapter plate and the pole of the top cover of the battery during welding, or the like. Of course, those skilled in the art should understand that the pressing plate tool provided in the embodiment of the present disclosure is not only configured to press various workpieces to be welded in the battery production process, but can also be configured to press other workpieces that need to be pressed and tightened in other production lines.

In an embodiment of the present disclosure, the battery may be a battery cell.

The battery cell refers to a basic unit that can realize mutual conversion of chemical energy and electrical energy, and may be used to make a battery module or a battery pack to supply power to an electrical apparatus.

The battery cell may be a secondary battery, and the secondary battery refers to a battery cell that can be used continually by activating an active material in a charging manner after the battery cell is discharged.

The battery cell may be a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery, or the like, which is not limited in the embodiments of the present disclosure.

The battery cell generally includes an electrode assembly. The electrode assembly includes a positive electrode, a negative electrode, and a spacer. During charging and discharging of the battery cell, active ions (such as lithium ions) are intercalated and deintercalated back and forth between the positive electrode and the negative electrode. The spacer is arranged between the positive electrode and the negative electrode, and can function to prevent short circuit between the positive electrode and the negative electrode and allow the active ions to pass through.

In some embodiments, the battery cell further includes an electrolyte, and the electrolyte plays a role in conducting ions between the positive electrode and the negative electrode. The type of the electrolyte is not specifically limited in the present disclosure, and may be selected according to needs. The electrolyte may be in a liquid state, a gel state or a solid state.

In some embodiments, the battery cell may include a shell. The shell is configured to encapsulate components, such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch cell, or a battery cell in another shape. The prismatic battery cell includes a square battery cell, a blade battery cell, and a multi-prism battery. For example, the multi-prism battery may be a hexagonal prism battery, or the like, which is not specifically limited in the present disclosure.

In some embodiments, the shell includes an end cover and a case, the case is provided with an opening, and the end cover closes the opening to form a closed space for accommodating substances such as the electrode assembly and the electrolyte. The case may be provided with one or a plurality of openings. One or a plurality of end covers may also be provided.

In some embodiments, the shell is provided with at least one electrode terminal, and the electrode terminal is electrically connected to a tab. The electrode terminal can be directly connected to the tab, or can also be indirectly connected to the tab through an adapter plate. The electrode terminal may be arranged on the end cover, or may also be arranged on the case.

In some embodiments, the shell is provided with a pressure relief mechanism. The pressure relief mechanism is configured to release an internal pressure of the battery cell.

In the embodiment of the present disclosure, the battery may also be a single physical module including one or a plurality of battery cells to provide a higher voltage and capacity. When there are a plurality of battery cells, the plurality of battery cells are connected by series connection, or parallel connection, or parallel-series connection through a bus component.

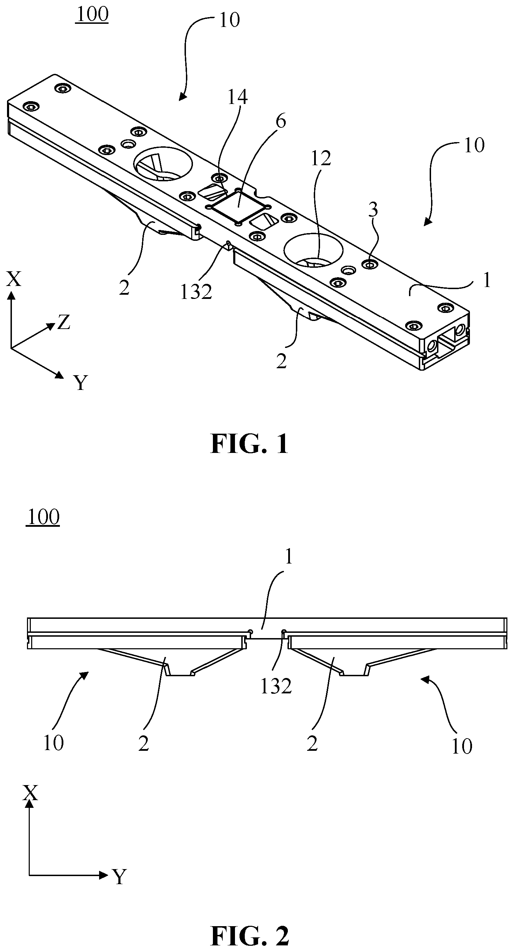

Some embodiments of the present disclosure are described in detail below with reference to FIG. 1 to FIG. 5.

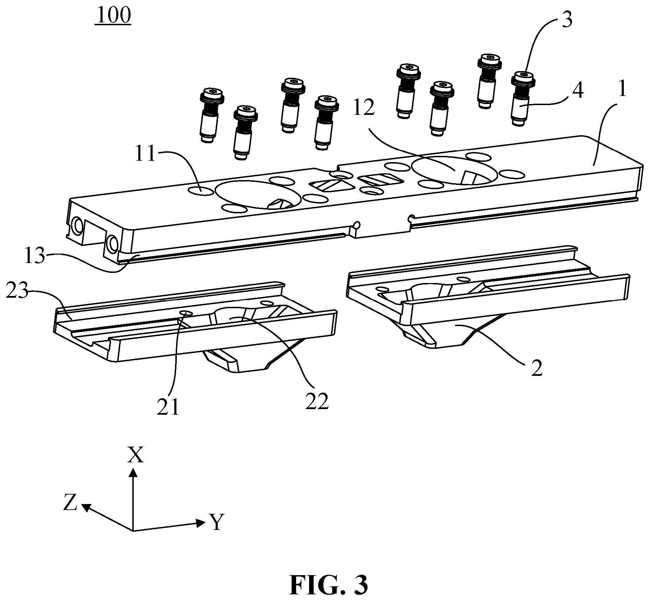

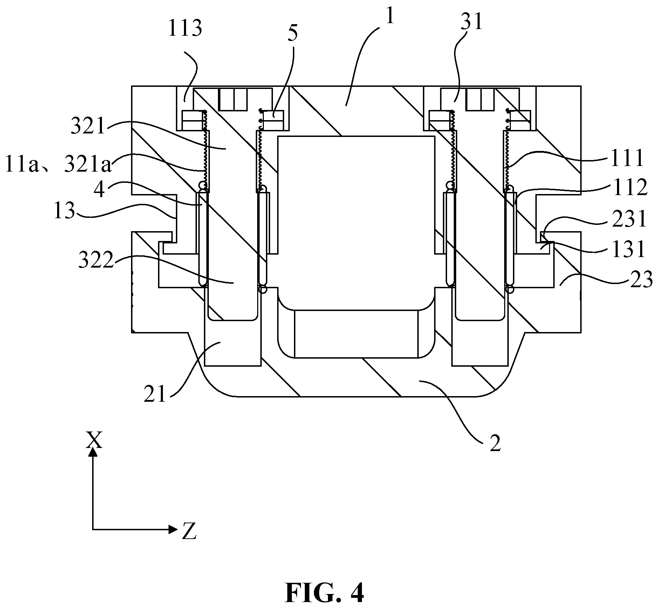

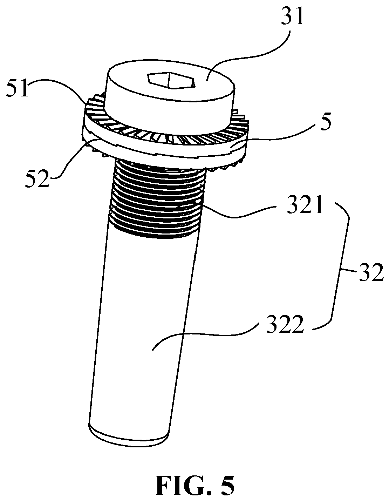

FIG. 1 is a schematic diagram of a three-dimensional structure of a pressing plate tool according to some embodiments of the present disclosure. FIG. 2 is a schematic diagram of a planar structure of a pressing plate tool according to some embodiments of the present disclosure. FIG. 3 is a schematic diagram of a three-dimensional exploded structure of a pressing plate tool according to some embodiments of the present disclosure. FIG. 4 is a partial planar sectional diagram of a pressing plate tool according to some embodiments of the present disclosure. FIG. 5 is a schematic diagram of a three-dimensional structure of a position-limiting member and a gasket according to some embodiments of the present disclosure.

In some embodiments of the present disclosure, for ease of description, a first direction, a second direction, and a third direction are set, and the first direction, the second direction, and the third direction are directions perpendicular to one another. However, those skilled in the art should understand that the embodiments of the present disclosure are not limited to the situation where the three directions are perpendicular to one another. For ease of explanation, as indicated by arrows in FIG. 1 to FIG. 4, a direction of an arrow X is taken as the first direction, a direction of an arrow Y is taken as the second direction, and a direction of an arrow Z is taken as the third direction.

As shown in FIG. 1 to FIG. 3, a first aspect of the present disclosure provides a pressing plate tool 100, and the pressing plate tool 100 includes at least one pressing plate assembly 10. The pressing plate assembly 10 includes a pressing plate 1, a pressing head 2, and a position-limiting member 3. The pressing plate 1 is provided with a via hole 11 extending in the first direction. The pressing head 2 is arranged on the pressing plate 1 in a manner of being capable of moving relative to the pressing plate 1 in the first direction, the pressing head 2 is provided with a position-limiting hole 21 extending in the first direction, and the position-limiting hole 21 is coaxial with and connected to the via hole 11. The position-limiting member 3 includes a head portion 31 and a rod portion 32. The rod portion 32 includes a first rod portion 321 and a second rod portion 322 connected in the first direction. A thread 321a is formed on the first rod portion 321, and the thread 321a of the first rod portion 321 is fastened to a thread 11a in the via hole 11. The second rod portion 322 extends into the position-limiting hole 21, and the second rod portion 322 is clearance-fitted to an inner surface of the position-limiting hole 21. The size of the second rod portion 322 extending into the position-limiting hole 21 is smaller than the size of the position-limiting hole 21 extending in the first direction.

The pressing plate tool 100 is configured to press and tighten a workpiece to be welded during a welding operation, so as to reduce the possibility that the workpiece to be welded moves relative to a welding apparatus, thereby affecting the welding quality.

The pressing plate assembly 10 is an assembly of the pressing plate tool 100 to realize the pressing function. There may be one or a plurality of pressing plate assemblies 10, which may be specifically set according to actual usage, and the quantity thereof is not specifically limited in the embodiment of the present disclosure.

In the embodiment of the present disclosure, the pressing plate 1 is configured to support the pressing head 2. The pressing plate 1 can be fixedly connected to a rack of the welding apparatus, for example, and is generally in the shape of a plate or a block. In other embodiments, the pressing plate 1 may also be connected at any other suitable position or be in any other suitable shape. As long as the pressing head 2 is capable of being stably supported, the position and shape of the pressing plate 1 are not specifically limited in the embodiment of the present disclosure.

Specifically, the pressing head 2 has a pressing surface, the pressing surface is a plane, and the pressing surface is configured to contact with the workpiece when pressing the workpiece. The pressing head 2 is arranged on the pressing plate 1 in a manner of being capable of moving in the first direction, so that the pressing head 2 is capable of floating in the first direction relative to the pressing plate 1. In this way, the floating pressing head 2 is capable of automatically adjusting its position under the action of pressure, so that the pressure distribution of pressing the workpiece is more uniform, thereby reducing the risk of deformation of or damage to the workpiece. In addition, the floating pressing head 2 is also capable of adapting to workpieces of different shapes and sizes, thus having a strong versatility. During pressing of different workpieces, there is no need to frequently adjust the position of the pressing head 2, which is capable of effectively improving the production efficiency.

For example, the pressing plate assembly 10 may be driven by a driving apparatus to move in a direction toward the workpiece until the pressing surface of the pressing head 2 contacts with the workpiece and applies a preset pressure to the workpiece, thereby completing the pressing operation.

For another example, a structure supporting the workpiece may be driven by the driving apparatus to move in a direction toward the pressing plate assembly 10 until the pressing surface of the pressing head 2 contacts with the workpiece and applies a preset pressure to the workpiece, thereby completing the pressing operation.

The driving apparatus includes, but is not limited to, a motor.

The method of connecting the pressing head 2 and the pressing plate 1 is not specifically limited in the embodiment of the present disclosure, as long as the pressing head 2 is capable of floating relative to the pressing plate 1 in the first direction.

As shown in FIG. 3, the pressing plate 1 is provided with a first through hole 12 extending in the first direction, and the pressing head 2 is provided with a second through hole 22 extending in the first direction. The first through hole 12 is coaxial and in communication with the second through hole 22 to together define a welding channel for a welding operation. After the pressing plate assembly 10 presses and tightens the workpiece, a welding tool of the welding apparatus can perform a corresponding welding operation on the workpiece through the welding channel.

In the embodiment of the present disclosure, the shape of the welding channel is generally truncated cone-shaped, that is, the equivalent diameter of a position-limiting channel gradually decreases in the first direction, where an opening at an end with the largest equivalent diameter is formed on the first through hole 12 and faces the welding tool of the welding apparatus, and an opening at an end with the smallest equivalent diameter is formed on the second through hole 22 and faces a part to be welded of the workpiece. Taking the welding tool being a laser welding tool as an example, the opening at the end with the largest equivalent diameter faces the laser welding tool, which is conducive to a laser beam entering and focusing on the welding channel more accurately, and the opening at the end with the smallest equivalent diameter faces the part to be welded of the workpiece, which is conducive to energy of the laser beam entering the welding channel to be capable of being better focused on the part to be welded of the workpiece, thereby reducing the possibility of poor welding due to insufficient welding energy.

In other embodiments, the shape of the welding channel may also be conical, cylindrical, or a combination of cylindrical and truncated cone shapes, or any other suitable shape.

The pressing plate assembly 10 further includes a position-limiting member 3, and the position-limiting member 3 connects the pressing plate 1 and the pressing head 2, and is configured to position-limit the pressing plate 1 and the pressing head 2 in a radial direction of the position-limiting member 3. In this way, the possibility of the pressing head 2 shaking relative to the pressing plate 1 is capable of being reduced, thereby improving the stability and reliability of the pressing plate tool 100 when pressing the workpiece.

There are a plurality of position-limiting members 3, and the plurality of position-limiting members 3 are evenly distributed at intervals on the pressing plate assembly 10, so that the position-limiting between the pressing plate 1 and the pressing head 2 is more stable. The quantity of the position-limiting members 3 is not specifically limited in the embodiment of the present disclosure, and can be specifically set according to the actual size of the pressing plate assembly 10, for example, it may be 4, 8, or other suitable numbers, and the position-limiting members can be arranged around the first through hole 12.

In the embodiment of the present disclosure, as shown in FIG. 3 and FIG. 4, the pressing plate 1 is further provided with a via hole 11, the via hole 11 is a through hole penetrating the pressing plate 1 in the first direction, and a thread 11a is formed on an inner surface of the via hole 11. The pressing head 2 is further provided with a position-limiting hole 21 extending in the first direction. The position-limiting hole 21 is coaxial and in communication with the via hole 11. The position-limiting member 3 passes through the via hole 11 and the position-limiting hole 21 in sequence, thereby position-limiting the pressing head 2 and the pressing plate 1.

As shown in FIG. 4 and FIG. 5, the position-limiting member 3 according to the embodiment of the present disclosure includes a head portion 31 and a rod portion 32. The rod portion 32 includes a first rod portion 321 and a second rod portion 322 interconnected in the first direction, where the first rod portion 321 is arranged adjacent to the head portion 31 in the first direction, and the second rod portion 322 is arranged away from the head portion 31 in the first direction. The position-limiting member 3 according to the embodiment of the present disclosure has a thread 321a formed merely on the first rod portion 321, and the thread 321a is fastened to the thread 11a in the via hole 11 of the pressing plate 1 through thread fitting. The second rod portion 322 extends into the position-limiting hole 21 of the pressing head 2, and is clearance-fitted to an inner surface of the position-limiting hole 21. The second rod portion 322 extends into the position-limiting hole 21, so that the position-limiting hole 21 can only move in the first direction. In this way, the pressing head 2 is only capable of floating in the first direction, and the pressing head 2 is position-limited, thereby reducing the possibility of failing to press the part to be welded of the workpiece or causing damage to the workpiece due to the pressing head 2 being distorted by pressing.

In addition, the second rod portion 322 of the position-limiting member 3 is clearance-fitted to the position-limiting hole 21 and does not contact with the inner surface of the position-limiting hole 21, and therefore, when the pressing head 2 presses the workpiece and floats in the first direction, the position-limiting hole 21 of the pressing head 2 moves relative to the second rod portion 322 of the position-limiting member 3, but the position-limiting member 3 itself does not move. In this way, the possibility of the position-limiting member 3 loosening due to its own movement during the repeated floating of the pressing head 2 is capable of being effectively reduced, thereby being capable of reducing the possibility of misalignment between the pressing head 2 and the pressing plate 1 and a floating failure of the pressing head 2, thereby improving the reliability of welding.

The form of the second rod portion 322 is not specifically limited in the embodiment of the present disclosure. The second rod portion 322 may be smooth, or may have a textured or rough surface, or any other suitable form, as long as the second rod portion 322 and the inner surface of the position-limiting hole 21 are clearance-fitted.

The position-limiting hole 21 of the pressing head 2 may be a through hole that penetrates through the pressing head 2 in the first direction, or may be a blind hole, as long as it is capable of being ensured that the size of the second rod portion 322 extending into the position-limiting hole 21 is smaller than the size of the position-limiting hole 21 extending in the first direction. In this way, the pressing head 2 is capable of floating smoothly in the first direction.

In some embodiments of the present disclosure, as shown in FIG. 4, the position-limiting hole 21 includes a blind hole.

Therefore, when the pressing head 2 presses the workpiece and floats in the first direction, the second rod portion 322 of the position-limiting member 3 extending into the position-limiting hole 21 may not expose from the pressing head 2 through the position-limiting hole 21, so that the position-limiting member 3 may not interfere with the pressed workpiece or other components outside the pressing head 2 during welding, thereby reducing the possibility of damage to the workpiece or other components, ensuring the quality of welding, and reducing the possibility of the position-limiting member 3 loosening due to the collision of components outside the pressing head 2 with the position-limiting member 3.

Of course, those skilled in the art should understand that in other embodiments, the position-limiting hole 21 may also be a through hole, as long as the second rod portion 322 of the position-limiting member 3 does not exceed the position-limiting hole 21 during the floating of the pressing head 2 in the first direction.

In some embodiments of the present disclosure, as shown in FIG. 3 and FIG. 4, the pressing plate tool 100 further includes an elastic member 4, and the elastic member 4 sleeves the second rod portion 322 and is configured to apply an elastic force to the pressing head 2. The via hole 11 includes a first section 111 and a second section 112. The first section 111 is located on a side of the second section 112 facing away from the pressing head 2 in the first direction, and a hole size of the first section 111 is smaller than a hole size of the second section 112. The thread 11a in the via hole 11 is formed on an inner wall of the first section 111, the elastic member 4 is partially located in the second section 112, and one end of the elastic member 4 abuts against a bottom end surface of the first section 111 (an end surface on the side facing away from the pressing plate 1 in the first direction), and the other end of the elastic member 4 abuts against a top end surface of the pressing head 2 (an end surface on the side close to the pressing plate 1 in the first direction).

Specifically, a size of the second rod portion 322 is larger than the hole size of the first section 111 and a hole size of the position-limiting hole 21, and in this way, the elastic member 4 may not enter the first section 111 of the via hole 11 and the position-limiting hole 21, so that the elastic member 4 is capable of being stably clamped between the bottom end surface of the first section 111 and the top end surface of the pressing head 2.

For example, the bottom end surface of the first section 111 may be provided with a groove, and one end of the elastic member 4 in the first direction may be accommodated in the groove, so that the elastic member 4 is capable of being better positioned and the installation of the elastic member 4 is facilitated.

Because of the arrangement of the elastic member 4, when the pressing head 2 presses the workpiece and floats toward the pressing plate 1 in the first direction, the elastic member 4 may be compressed and apply an elastic force away from the pressing plate 1 to the pressing head 2, thereby achieving a certain elastic buffering function, so that the pressing force applied by the pressing head 2 on the workpiece is more uniform, which thus protects the workpiece and reduces the possibility of damage to the workpiece due to excessive pressing. In addition, when the size and shape of the workpiece to be welded change, the pressing head 2 is capable of better adapting to the changes in the workpiece under the action of the elastic member to press the workpiece stably and reliably.

In addition, due to the arrangement of the elastic member 4, when the pressing plate tool 100 finishes pressing the workpiece and moves away from the workpiece, the pressing head 2 is capable of gradually moving away from the pressing plate 1 in the first direction and return to its initial position under the buffering effect of the elastic member 4, thereby reducing the possibility of damage to the pressing plate 1 and the pressing head 2 due to sudden collision.

The elastic member 4 includes, but is not limited to, a compression spring.

In some embodiments of the present disclosure, as shown in FIG. 5, the pressing plate assembly 10 includes at least one gasket 5, and the gasket 5 sleeves the position-limiting member 3 and located between the head portion 31 and the pressing plate 1.

In the embodiments of the present disclosure, the gasket 5 is substantially annular. In other embodiments, the gasket 5 may also be in any other suitable shape.

Although only providing the thread 321a on the first rod portion 321 of the position-limiting member 3 is capable of reducing the loosening of the position-limiting member 3 due to its own movement, this cannot completely reduce the loosening of the position-limiting member 3 due to mechanical vibration and the like.

Therefore, the pressing plate assembly 10 further includes the gasket 5. By arranging the gasket 5, a contact area between the head portion 31 and the pressing plate 1 is capable of being increased, thereby increasing the friction between the two, improving the stability of the connection relationship between the position-limiting member 3 and the via hole 11, and thus making the connection between the position-limiting member 3 and the pressing plate 1 tighter, which further reduces the possibility of loosening of the position-limiting member 3.

In some embodiments of the present disclosure, two end surfaces of the gasket 5 opposite to each other in the first direction are respectively provided with a first serrated portion 51 and a second serrated portion 52, and when there are a plurality of gaskets 5, the first serrated portion 51 and the second serrated portion 52 on opposite surfaces of adjacent gaskets 5 are capable of meshing with each other.

Those skilled in the art should understand that in other embodiments, the gasket 5 may have a serrated portion formed on only one end surface, that is, the gasket 5 may only have the first serrated portion 51 or the gasket 5 may only have the second serrated portion 52.

The tooth shapes of the first serrated portion 51 and the second serrated portion 52 include, but are not limited to, straight teeth, helical teeth, and the like, and the tooth shape thereof is not specifically limited in the embodiment of the present disclosure. In addition, the tooth shapes of the first serrated portion 51 and the second serrated portion 52 may be the same or different.

The gasket 5 is provided with the first serrated portion 51 and the second serrated portion 52, and therefore, when the position-limiting member 3 is tightened on the pressing plate 1, the serrated portions may deform when subjected to force, and therefore, the friction forces between the gasket 5 and the head portion 31 of the position-limiting member 3 and the pressing plate 1 may be increased, which further improves the locking force of the gasket 5, thereby further improving the anti-loosening effect.

In addition, the first serrated portion 51 and the second serrated portion 52 are capable of meshing with each other, and therefore, when a plurality of gaskets 5 are arranged, the gaskets 5 are capable of meshing with each other through the serrated portions to form a stable combination configuration, thereby further reducing the possibility of loosening of the position-limiting member 3.

In the embodiment of the present disclosure, there are two gaskets 5. When the position-limiting member 3 tends to loose due to mechanical vibration, the first serrated portion 51 and the second serrated portion 52 of the two gaskets 5 meshing with each other may produce misalignment interference of the tooth surfaces, thereby increasing the resistance and reducing the possibility of loosening of the head portion 31 of the position-limiting member 3.

Of course, those skilled in the art should understand that the quantity of the gaskets 5 is not specifically limited in the embodiment of the present disclosure, and only one gasket 5 or more (more than two) gaskets 5 may also be arranged.

In some embodiments of the present disclosure, the first serrated portion 51 includes a plurality of first helical teeth distributed circumferentially around an axis of the gasket 5, the second serrated portion 52 includes a plurality of second helical teeth distributed circumferentially around the axis of the gasket, and the first helical teeth and the second helical teeth have opposite inclination directions.

The first serrated portion 51 includes the first helical teeth and the second serrated portion 52 includes the second helical teeth, and therefore, after the position-limiting member 3 is tightened with the via hole 11, the first helical teeth and the second helical teeth are capable of respectively abutting against the bottom end surface of the head portion 31 of the position-limiting member 3 in the first direction and the top end surface of the pressing plate 1 in the first direction, thereby reducing the possibility of the position-limiting member 3 and the pressing plate 1 rotating in an opposite direction relative to the gasket 5, so as to improve the anti-loosening effect.

In some embodiments of the present disclosure, the first helical teeth are evenly distributed along the entire circumference in a circumferential direction of the gasket 5; and/or the second helical teeth are evenly distributed along the entire circumference in the circumferential direction of the gasket 5.

Therefore, the uniformity of the anti-loosening effect of the gasket 5 is capable of being improved, and the possibility of the position-limiting member 3 becoming loose can be further reduced.

Those skilled in the art should understand that the first helical teeth and the second helical teeth may also be discretely distributed along the entire circumference of the gasket 5, that is, a plurality of first helical teeth are formed at intervals, and/or a plurality of second helical teeth are formed at intervals. The distribution of the first helical teeth and the second helical teeth is not specifically limited in the embodiment of the present disclosure, as long as the first helical teeth and the second helical teeth of two gaskets 5 are capable of meshing with each other and capable of meeting the anti-loosening requirements.

In some embodiments of the present disclosure, as shown in FIG. 4, a countersunk hole 113 is formed on a surface of the via hole 11 facing away from the pressing head 2, the head portion 31 of the position-limiting member 3 is located in the countersunk hole 113, and the gasket 5 is located between the head portion 31 and the bottom end surface of the countersunk hole 113.

Therefore, when the position-limiting member 3 connects the pressing plate 1 and the pressing head 2, the head portion 31 of the position-limiting member 3 and the gasket 5 may not be exposed on an outer surface of the pressing plate 1 facing away from the pressing head 2, so that the outer surface of the pressing plate 1 facing away from the pressing head 2 is capable of being made smoother, which facilitates assembling of other components on the outer surface. In addition, the possibility of interference between the head portion 31 and other components arranged on the outer surface of the pressing plate 1 is capable of being reduced, thereby reducing the possibility of an undesirable condition such as a floating failure of the pressing head 2 due to misalignment of the pressing head 2 and the pressing plate 1.

The size of the countersunk hole 113 in the first direction is not specifically limited in the embodiment of the present disclosure, as long as it is capable of enabling the top end surface of the head portion 31 in the first direction not to be exposed on the outer surface of one side of the pressing plate 1 facing away from the pressing head 2. The size of the countersunk hole 113 may be specifically set according to the specific size of the head portion 31 of the position-limiting member 3.

In some embodiments of the present disclosure, as shown in FIG. 3 and FIG. 4, the pressing head 2 includes a hook portion 23 extending in the second direction, and the pressing plate 1 includes a slot 13 extending in the second direction. The slot 13 is configured for the hook portion 23 to insert in, and the pressing head 2 is arranged on the pressing plate 1 through the cooperation between the hook portion 23 and the slot 13. When the hook portion 23 is inserted into the slot 13, the hook portion 23 is capable of reciprocating in the slot 13 in the first direction, and the second direction is perpendicular to the first direction.

Specifically, as shown in FIG. 4, an end portion of the slot 13 protrudes in the third direction to form a first rib 131, and an end portion of the hook portion 23 protrudes in the third direction to form a second rib 231. The first rib 131 and the second rib 231 have opposite extension directions in the third direction. When the hook portion 23 is inserted into the slot 13, the second rib 231 is hooked on the first rib 131, so that the pressing head 2 is capable of being limited in the first direction, thereby reducing the possibility of the pressing head 2 falling off the pressing plate 1. The third direction is perpendicular to both the first direction and the second direction.

In addition, the second rib 231 is capable of reciprocating in the slot 13 in the first direction. When the pressing head 2 is in an initial state, that is, when it is not pressing the workpiece, there is an interval distance between the top end surface of the slot 13 in the first direction and the second rib 231. The interval distance is a distance at which the pressing head 2 is capable of floating in the first direction relative to the pressing plate 1.

Therefore, through the cooperation of the hook portion 23 and the slot 13, the pressing head 2 and the pressing plate 1 are capable of being position-limited in the first direction in a simple manner without affecting the floating of the pressing head 2 in the first direction, which improves the reliability of the connection between the pressing head 2 and the pressing plate 1.

As shown in FIG. 1 and FIG. 2, corners of the hook portion 23 are substantially right-angled, and corners of the slot 13 are provided with extension grooves 132 with a substantially circular cross-section. In this way, when the pressing head 2 floats in the first direction, the corners of the hook portion 23 are less likely to cause damage to the slot of the pressing plate 1, thereby being capable of extending the service life of the pressing plate tool 100.

In some embodiments of the present disclosure, the elastic member 4 includes a spring.

The spring has a simple structure, is easy to install, and is capable of cushioning impact and absorbing vibration. In this way, the pressing plate tool 100 is capable of achieving elastic buffering of the workpiece with a simple structure, thereby protecting the workpiece, increasing the reliability of the pressing plate tool 100, and reducing the production cost of the pressing plate tool 100.

Of course, in other embodiments, the elastic member may also be any other suitable structure such as a leaf spring.

In some embodiments of the present disclosure, as shown in FIG. 1, there are two pressing plate assemblies 10. The pressing plates 1 of the two pressing plate assemblies 10 are connected to each other, or the pressing plates 1 of the two pressing plate assemblies 10 are formed into an integral structure.

As a result, the pressing plate tool 100 is capable of pressing two groups of workpieces at the same time, thereby improving the production efficiency.

Of course, those skilled in the art should understand that in other embodiments, the quantity of the pressing plate assemblies 10 may be only one or more (more than two), which may be specifically set according to actual conditions and processing difficulty.

In the embodiment of the present disclosure, the pressing plate 1 of the pressing plate assembly 10 is formed into an integrated structure, in this way, it is capable of reducing the quantity of components and reducing the difficulty of assembling. Of course, in other embodiments, the pressing plate assembly 10 may also be assembled together as a separate split structure. In this way, it is capable of selecting a suitable quantity of pressing plate assemblies 10 for assembling according to actual usage requirements, which provides better flexibility.

In addition, the pressing plate assemblies 10 connecting to each other or forming into an integrated structure are capable of making the structure of the pressing plate tool 100 more compact and more convenient for assembling.

In some embodiments of the present disclosure, the pressing plates 1 of two pressing plate assemblies 10 are connected to each other, the pressing heads 2 of the two pressing plate assemblies 10 are arranged at an interval in the second direction, and the second direction is perpendicular to the first direction.

Therefore, when the pressing plate tool 100 needs to be replaced, a clamping jaw of the replacing apparatus is capable of extending into the interval area between the two pressing heads 2 and clamping the interconnected pressing plates 1 in the interval area, thereby facilitating the clamping jaw to clamp the pressing plate tool 100.

In some embodiments, as shown in FIG. 1, the pressing plate tool 100 further includes an identification code 6. A groove 14 is formed on a surface of one side of the pressing plate 1 facing away from the pressing head 2, and the identification code 6 is arranged in the groove 14.

The identification code 6 may be, for example, a QR code, a bar code, a radio frequency identification code, or another code with an identification function. The identification code 6 is used to store information related to the pressing plate tool 100.

The pressing plate tool 100 is provided with the identification code 6, and therefore, the identification code 6 is capable of being scanned by a scanning apparatus to realize traceability of the welding process of the workpiece, and the use status of the pressing plate tool 100 is also capable of being traced, so that the pressing plate tool 100 is capable of being replaced in time to ensure the welding quality.

In addition, the pressing plate 1 is provided with the groove 14, and the identification code 6 can be adhered in the groove by bonding, for example. By arranging the groove 14, the position of the identification code 6 on the pressing plate 1 can be kept uniform each time, so that the scanning apparatus is capable of accurately scanning the identification code 6. Moreover, compared with the traditional code engraving process, adhering the identification code 6 in the groove 14 is more conducive to replacing the identification code 6 when the identification code 6 is worn or damaged.

The groove 14 is substantially rectangular, and the four corners each extend outward in semicircles, so that when the identification code 6 needs to be replaced, it is easy to remove the identification code 6 in the groove 14. A second aspect of the embodiments of the present disclosure provides a welding apparatus, and the welding apparatus includes the pressing plate tool 100 provided according to the first aspect of the present disclosure, a positioning tool, and a welding tool. The pressing plate tool 100 is capable of reciprocating in a first direction. The positioning tool is configured to position a workpiece to be welded, and the positioning tool is located at an opposite side of the pressing plate tool 100 in the first direction. The welding tool is configured to weld the workpiece pressed by a pressing head 2 of the pressing tool 100.

The welding apparatus includes the pressing plate tool 100, and therefore, the workpiece to be welded is capable of being pressed by the pressing plate tool 100 before welding, thereby being capable of reducing the occurrence of undesirable conditions such as welding defocusing and false welding caused by unexpected movement of the workpiece during the welding, which improves the quality of welding and ensures the reliability of the welding apparatus.

In the embodiment of the present disclosure, the positioning tool is a tool for realizing positioning of the workpiece to be welded. The positioning tool is located on the opposite side of the pressing plate tool 100 in the first direction. When the workpiece is positioned in the positioning tool, the pressing plate tool 100 moves toward the positioning tool in the first direction and presses the workpiece to be welded on the positioning tool. After pressing tightly, the welding tool welds the workpiece pressed by the pressing head 2.

In other embodiments, after the workpiece is positioned, the positioning tool may move in the first direction toward the pressing plate tool 100 to press and tighten the workpiece.

The welding tool is a tool for welding workpieces, and the welding tool includes, but is not limited to, a laser welding tool, an ultrasonic welding tool, a resistance welding tool, and the like. The type of the welding tool is not specifically limited in the embodiments of the present disclosure.

Specific examples of some embodiments of the present disclosure are described below with reference to the accompanying drawings.

As a specific example, the pressing plate tool 100 includes an upper pressing plate (the pressing plate 1) and two pressing heads (the pressing heads 2), and the pressing heads and the upper pressing plate are position-limited by guide edges (the first rib 131 and the second rib 231), and an interval distance between the guide edge of the pressing head and the guide edge of the upper pressing plate in the first direction defines the floating size of the pressing head in the first direction. The pressing plate tool 100 includes a special screw (the position-limiting member 3), a thread of the screw is only located at an upper half of the screw (the first rod portion 321), and a lower half (the second rod portion 322) is a smooth shaft structure. The upper part of the screw is locked to the upper pressing plate, the smooth shaft of the lower part is sleeved with a spring structure (the elastic member 4), and the lower part extends into a blind hole of the pressing head. Two anti-loosening gaskets (the gaskets 5) are further installed between the screw and the upper pressing plate. The two anti-loosening gaskets are provided with serrated portions, and the serrated portions opposite to each other of the two anti-loosening gaskets are meshed with each other.

In this way, through the special screw design in combination with the two-way anti-loosening gaskets, the screw is capable of being prevented from loosening to the greatest extent, thereby being capable of reducing the possibility of misalignment between the pressing head and the upper pressing plate and the possibility of floating failure of the pressing head, thereby improving the reliability of welding.

The above embodiments are merely intended for illustrating rather than limiting the technical solutions of the present disclosure. Although the present disclosure has been described in detail with reference to the various embodiments above, those of ordinary skill in the art should understand that the technical solutions specified in the various embodiments above may still be modified, or some or all of the technical features therein may be equivalently substituted; and such modifications or substitutions do not cause the essence of the corresponding technical solutions to depart from the scope of the technical solutions of the various embodiments of the present disclosure and shall fall within the scope the present disclosure. In particular, the technical features mentioned in the various embodiments can be combined in any manner as long as there is no structural conflict.

## Claims

1. A pressing plate tool, the pressing plate tool comprising at least one pressing plate assembly, and the pressing plate assembly comprising:
a pressing plate provided with a via hole extending in a first direction;
a pressing head arranged on the pressing plate in a manner of being capable of moving relative to the pressing plate in the first direction, wherein the pressing head is provided with a position-limiting hole extending in the first direction, and the position-limiting hole is coaxial and in communication with the via hole; and
a position-limiting member comprising a head portion and a rod portion, wherein the rod portion comprises a first rod portion and a second rod portion connected in the first direction, a thread is formed on the first rod portion, the thread of the first rod portion is fastened to a thread in the via hole, the second rod portion extends into the position-limiting hole, and the second rod portion is clearance-fitted to an inner surface of the position-limiting hole;
wherein the size of the second rod portion extending into the position-limiting hole is smaller than the size of the position-limiting hole extending in the first direction.

2. The pressing plate tool according to claim 1, wherein
the position-limiting hole comprises a blind hole.

3. The pressing plate tool according to claim 1 or 2, wherein
the pressing plate tool further comprises an elastic member, and the elastic member sleeves the second rod portion and is configured to apply an elastic force to the pressing head;
the via hole comprises a first section and a second section, the first section is located on a side of the second section facing away from the pressing head in the first direction, and a hole size of the first section is smaller than a hole size of the second section; and
the thread in the via hole is formed on an inner wall of the first section, the elastic member is partially located in the second section, and one end of the elastic member abuts against an end surface of the first section on a side facing away from the pressing plate in the first direction, and the other end of the elastic member abuts against an end surface of the pressing head on a side close to the pressing plate in the first direction.

4. The pressing plate tool according to any one of claims 1 to 3, wherein
the pressing plate assembly comprises at least one gasket, and the gasket sleeves the position-limiting member and located between the head portion and the pressing plate.

5. The pressing plate tool according to claim 4, wherein
two end surfaces of the gasket opposite to each other in the first direction are respectively provided with a first serrated portion and a second serrated portion, and when there are a plurality of gaskets, the first serrated portion and the second serrated portion on opposite surfaces of adjacent gaskets are capable of meshing with each other.

6. The pressing plate tool according to claim 5, wherein
the first serrated portion comprises a plurality of first helical teeth distributed circumferentially around an axis of the gasket, the second serrated portion comprises a plurality of second helical teeth distributed circumferentially around the axis of the gasket, and the first helical teeth and the second helical teeth have opposite inclination directions.

7. The pressing plate tool according to claim 6, wherein
the first helical teeth are evenly distributed along the entire circumference in a circumferential direction of the gasket; and/or
the second helical teeth are evenly distributed along the entire circumference in the circumferential direction of the gasket.

8. The pressing plate tool according to any one of claims 4 to 7, wherein
a countersunk hole is formed on a surface of the via hole facing away from the pressing head, the head portion of the position-limiting member is located in the countersunk hole, and the gasket is located between the head portion and a bottom end surface of the countersunk hole.

9. The pressing plate tool according to any one of claims 1 to 8, wherein
the pressing head comprises a hook portion extending in a second direction, the pressing plate comprises a slot extending in the second direction, the slot is configured for the hook portion to insert in, and the pressing head is arranged on the pressing plate through the cooperation between the hook portion and the slot;
wherein when the hook portion is inserted into the slot, the hook portion is capable of reciprocating in the slot in the first direction, and the second direction is perpendicular to the first direction.

10. The pressing plate tool according to claim 9, wherein
an end portion of the slot protrudes in a third direction to form a first rib, the hook portion protrudes in the third direction to form a second rib, and the first rib and the second rib have opposite extension directions in the third direction; and
the third direction is perpendicular to both the first direction and the second direction.

11. The pressing plate tool according to claim 9 or 10, wherein
corners of the hook portion are in a right-angle shape, and corners of the slot are provided with extension grooves with a circular cross-section.

12. The pressing plate tool according to any one of claims 3 to 11, wherein
the elastic member comprises a spring.

13. The pressing plate tool according to any one of claims 1 to 12, wherein
there are two pressing plate assemblies;
the pressing plates of the two pressing plate assemblies are connected to each other; or
the pressing plates of the two pressing plate assemblies are formed into an integral structure.

14. The pressing plate tool according to claim 13, wherein
the pressing plates of two pressing plate assemblies are connected to each other, the pressing heads of the two pressing plate assemblies are arranged at an interval in the second direction; and
the second direction is perpendicular to the first direction.

15. The pressing plate tool according to any one of claims 1 to 14, wherein
the pressing plate tool further comprises an identification code; and
a groove is formed on a surface of the pressing plate facing away from the pressing head, and the identification code is arranged in the groove.

16. The pressing plate tool according to claim 15, wherein
the groove is rectangular, and four corners of the groove extend outward in semicircles.

17. The pressing plate tool according to claim 15 or 16, wherein
the identification code comprises a QR code, a bar code, or a radio frequency identification code.

18. The pressing plate tool according to any one of claims 1 to 17, wherein
the pressing plate is provided with a first through hole extending in the first direction, the pressing head is provided with a second through hole extending in the first direction, the first through hole is coaxial and in communication with the second through hole to together define a welding channel for a welding operation.

19. The pressing plate tool according to claim 18, wherein
an equivalent diameter of the welding channel gradually decreases in the first direction, an opening at an end with the largest equivalent diameter is formed on the first through hole, and an opening at an end with the smallest equivalent diameter is formed on the second through hole.

20. A welding apparatus, comprising:
the pressing plate tool according to any one of claims 1 to 19, wherein the pressing plate tool is capable of reciprocating in a first direction;
a positioning tool configured to position a workpiece to be welded, wherein the positioning tool is located at an opposite side of the pressing plate tool in the first direction; and
a welding tool configured to weld the workpiece pressed by the pressing head of the pressing plate tool.
